# EUROPEAN PATENT SPECIFICATION

(11) **EP 4 531 199 B1**
(45) Date of publication and mention of the grant of the patent: **22.07.2026**
(21) Application number: 23829882.2
(22) Date of filing: 06.06.2023
(51) Int. Cl.: H01M 50/543, H01M 50/186, H01M 10/04, H01M 50/586, H01M 50/531, H01M 50/528, H01M 50/595, H01M 50/102, H01M 50/548

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(30) Priority: 27.06.2022 CN 202210734421
(43) Date of publication of application: 02.04.2025
(73) Proprietor: Ningde Amperex Technology Limited, Ningde, Fujian 352100 (CN)
(72) Inventor: HU, Dongge, Ningde, Fujian 352100 (CN); ZHI, Ying, Ningde, Fujian 352100 (CN); LI, Lei, Ningde, Fujian 352100 (CN); CHEN, Honghao, Ningde, Fujian 352100 (CN)
(74) Representative: Icosa
(86) International application number: PCT/CN2023/098659
(87) International publication number: WO 2024/001698

(56) References cited:
- WO-A1-2022/068027
- WO-A1-2022/104958
- CN-A- 111 416 068
- CN-A- 112 531 242
- CN-A- 113 597 709
- CN-A- 114 824 681
- JP-A- H10 312 783
- KR-A- 20070 037 882

## Description

### TECHNICAL FIELD

This invention relates to the field of energy storage technologies, and in particular, to an electrochemical apparatus and an electronic apparatus including such electrochemical apparatus.

### BACKGROUND

Electrochemical apparatuses (for example, secondary batteries) are widely used in electronic products such as electronic mobile devices, electric tools, and electric vehicles. An electrochemical apparatus typically includes an electrode assembly and a housing for accommodating the electrode assembly. The housing is provided with an electrolyte injection opening, and electrolyte is injected into the housing via the electrolyte injection opening. After electrolyte injection, in order to keep the interior of the electrochemical apparatus closed relative to the outside, the electrolyte injection opening is sealed using a sealing nail.

CN111416068A discloses an electrochemical apparatus with an electrolyte injection opening and a central column for conducting the electrolyte.

KR20070037882A discloses a center pin comprising two hollow cylindrical members, where the second member is stored inside the first member.

However, the sealing nail increases the height of the housing and partially extends into the housing, taking up some space, thereby reducing the energy density of the electrochemical apparatus.

### SUMMARY

In view of the above shortcomings, it is necessary to provide an electrochemical apparatus conducive to improving energy density.

In addition, this application further provides an electronic apparatus including such electrochemical apparatus.

The invention is defined in the claims.

A first aspect of the claimed invention provides an electrochemical apparatus including a housing, an electrode assembly, and an electrolyte. The housing includes a first housing body and a second housing body, where the first housing body and the second housing body enclose an accommodating space. The electrode assembly and the electrolyte are provided in the accommodating space. The electrode assembly includes a first electrode plate, a second electrode plate, and a separator located between the first electrode plate and the second electrode plate. The electrochemical apparatus further includes a first conductive member and a second conductive member. The first conductive member is provided in the accommodating space and fixed on the first housing body. The first electrode plate, the separator and the second electrode plate are wound around the first conductive member to form the electrode assembly, and the first electrode plate is electrically connected to the first conductive member. The first conductive member is a hollow structure and defines a first cavity. The first housing body is further provided with a first through hole, where the first through hole is in communication with the first cavity. The second conductive member is provided in the first cavity and electrically insulated from the first conductive member, and the second electrode plate is electrically connected to the second conductive member. The second conductive member is a hollow structure and defines a second cavity. The second conductive member includes a body portion and a sealing portion electrically connected to each other. The body portion is provided with a second through hole, where the second through hole is in communication with the second cavity and the accommodating space. The sealing portion is hermetically connected to the body portion to isolate the second cavity from the outside.

In this invention, the second conductive member serves as a pole to lead out electric polarity of the second electrode plate. In addition, the second conductive member is also used for electrolyte injection. The electrolyte is injected into the second conductive member, such that the electrolyte can flow into the accommodating space via the second through hole. After electrolyte injection is completed, the sealing portion of the second conductive member is hermetically connected to the body portion, reducing the risk of electrolyte leakage after electrolyte injection. In this invention, there is no need to provide an electrolyte injection opening in the housing, reducing the risk of affecting surface flatness caused by welding a sealing nail in the electrolyte injection opening after electrolyte injection. This also reduces the risk of increasing the height of the electrochemical apparatus or taking up internal space of the housing due to provision of the sealing nail, thus helping to increase the energy density.

In some possible implementations, a first insulating layer is provided between the first conductive member and the body portion, where the first insulating layer is further configured to hermetically connect the first conductive member and the body portion. Therefore, the first insulating layer can reduce the risk of a short circuit caused by contact between the first conductive member and the body portion, and can also reduce the risk of the electrolyte leaking via a gap between the first conductive member and the body portion.

In some possible implementations, the first conductive member includes a first end and a second end opposite to the first end, and the first end is connected to the first housing body. In a direction from the second end toward the first end (hereinafter referred to as a first direction), the body portion includes a third end and a fourth end opposite to the third end. The sealing portion is hermetically connected to the third end, and the second through hole is provided on the fourth end. The second through hole is provided on the fourth end, that is, at an end of the second conductive member away from electrolyte injection (that is, the end where the sealing portion is mounted). This improves the convenience for mounting the sealing portion, and also allows an electrolyte in the second cavity to flow into the accommodating space in a timely manner during electrolyte injection, reducing the risk of electrolyte leakage caused by that the electrolyte in the second cavity cannot flow into the accommodating space in a timely manner during electrolyte injection.

In some possible implementations, in a direction opposite to the first direction, the fourth end extends out with respect to the second end. The fourth end includes an end surface away from the sealing portion and a side surface connected to the end surface, the second through hole being provided in the side surface. Therefore, while the electrolyte injected into the second cavity is flowing into the accommodating space via the second through hole, the obstruction caused by an inner wall of the first conductive member to the electrolyte is reduced.

In some possible implementations, in the first direction, the third end extends out of the first through hole. In this way, when the body portion is hermetically connected to the sealing portion, the risk of a short circuit caused by contact between the sealing portion and the first housing body can be reduced. The outward extension of the third end also facilitates electrical connection between the second conductive member and an external element.

In some possible implementations, the first electrode plate includes a first current collector and a first active substance layer, where the first active substance layer is provided on the first current collector, and the first current collector includes an uncoated foil region with no first active substance layer at one end in a length direction, the uncoated foil region being attached to an outer side surface of the first conductive member. In this way, the first electrode plate and the first conductive member can be electrically connected without welding or bonding, simplifying the process. It should be noted that in other embodiments, it is apparent that the above two can be electrically connected by welding or bonding the uncoated foil region to the first conductive member.

In some possible implementations, the outer side surface of the first conductive member is roughened. This can increase a friction force between the uncoated foil region and the first conductive member, facilitating winding and improving tightness of inner turns of the electrode assembly after winding. In addition, the roughened first conductive member reduces the contact resistance between it and the uncoated foil region, thus reducing the internal resistance of the electrode assembly.

In some possible implementations, the second electrode plate includes a second current collector. The electrode assembly further includes a tab connected to the second current collector, the tab being connected to an end surface of the fourth end. In this way, the second electrode plate is electrically connected to the second conductive member.

In some possible implementations, a second insulating layer is provided between the tab and the second housing body. The second insulating layer is configured to electrically insulate the second housing body from the tab, reducing the risk of a short circuit.

In some possible implementations, the tab and the end surface are fixed through welding, improving the stability and reliability of connection between the tab and the end surface.

In some possible implementations, the sealing portion and the body portion are fixed through welding, improving the stability and reliability of connection between the sealing portion and the body portion.

In some possible implementations, at least one of the first housing body or the second housing body is further provided with an explosion-proof valve. When gas is produced and continuously accumulates inside the electrochemical apparatus, the explosion-proof valve is blown open, such that the gas in the housing is released and pressure in the accommodating space is reduced, thereby improving the safety of the electrochemical apparatus.

A second aspect of this invention further provides an electronic apparatus including such electrochemical apparatus. The electronic apparatus is supplied with power via the foregoing electrochemical apparatus.

### BRIEF DESCRIPTION OF DRAWINGS

The above and/or additional aspects and advantages of this invention will become obvious and easy to understand from the description of some embodiments with reference to the following accompanying drawings.
FIG. 1 is a three-dimensional schematic structural diagram of an electrochemical apparatus according to an embodiment of this invention.
FIG. 2 is an exploded view of the electrochemical apparatus shown in FIG. 1.
FIG. 3 is an III-III cross-sectional view of the electrochemical apparatus shown in FIG. 1.
FIG. 4 is a local enlarged view of the electrochemical apparatus shown in FIG. 3 at position A.
FIG. 5 is a local enlarged view of the electrochemical apparatus shown in FIG. 3 at position B.
FIG. 6 is a cross-sectional view of an electrochemical apparatus according to another embodiment of this invention.
FIG. 7 is a schematic structural diagram of an electronic apparatus according to an embodiment of this invention.

This invention is further described with reference to the accompanying drawings in the following specific embodiments.

### DETAILED DESCRIPTION

The following clearly describes in detail the technical solutions in some embodiments of this invention. Apparently, the described embodiments are only some rather than all of embodiments of this invention. Unless otherwise defined, all technical and scientific terms used herein shall have the same meanings as commonly understood by persons skilled in the art to which this application belongs.

The following describes some embodiments of the invention in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected to the element B or an intermediate element C may be present therebetween such that the element A and the element B can be indirectly connected to each other.

Further, the use of "may" in describing embodiments of this invention refers to "one or more embodiments of this invention."

The technical terms used herein are merely intended to describe specific embodiments. As used herein, the singular forms are intended to include the plural forms as well, unless otherwise clearly indicated in the context. It should be further understood that the term "include" used in this specification indicates the presence of stated features, numerical values, steps, operations, elements, and/or components but do not preclude the presence or addition of one or more other features, numerical values, steps, operations, elements, components, and/or combinations thereof.

Spatial related terms such as "above" may be used herein for ease of description to describe the relationship between one element or feature and another element (elements) or feature (features) as illustrated in the figure. It should be understood that spatial related terms are intended to encompass different orientations of a device or an apparatus in use or operation in addition to the orientations depicted in the figures. For example, if the device in the figures is turned over, elements described as "above" or "over" other elements or features would then be oriented "below" or "beneath" the other elements or features. Thus, the example term "above" can encompass both an orientation of above and an orientation below. It should be understood that although the terms first, second, third, and so on may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

As used herein, terms "parallel" and "perpendicular" are used to describe ideal states between two components. During actual production or use, two components may be approximately parallel or perpendicular to each other. For example, with reference to numerical values, "being parallel" may indicate that an included angle between two straight lines is within a range of -10° to +10°, "being parallel" may indicate that a dihedral angle of two planes is within a range of -10° to +10°, and "being parallel" may also indicate that an included angle between a straight line and a plane is within a range of -10° to +10°. "Being perpendicular" may indicate that an included angle between two straight lines is within a range of 90°±10°, "being perpendicular" may indicate that a dihedral angle of two planes is within a range of 90°±10°, and "being perpendicular" may also indicate that an included angle between a straight line and a plane is within a range of 90°±10°. Two components described as "being parallel" or "being perpendicular" to each other may not be absolutely straight lines or planes, and may be approximately straight lines or planes. From a macroscopic perspective, the component can be considered as a "straight line" or "plane" as long as its overall extension direction is a straight line or a plane.

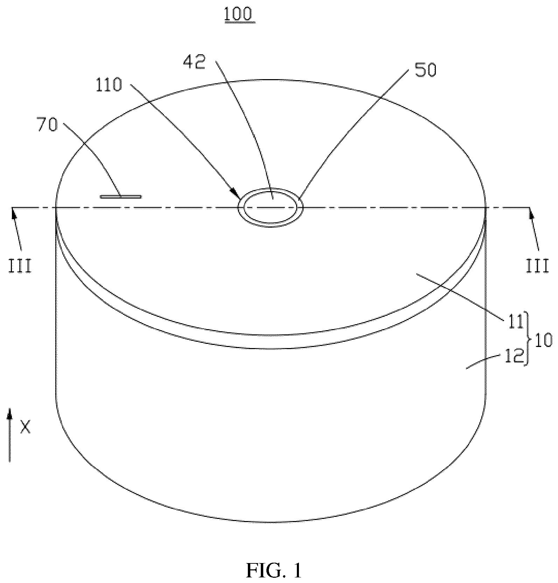

Referring to FIG. 1 to FIG. 3, an embodiment of this invention provides an electrochemical apparatus 100 including a housing 10, an electrode assembly 20, and an electrolyte (not shown). The housing 10 includes a first housing body 11 and a second housing body 12, where the first housing body 11 and the second housing body 12 enclose an accommodating space S. The electrode assembly 20 and the electrolyte are both provided in the accommodating space S. In some embodiments, the second housing body 12 includes a bottom wall 121 and a side wall 122 provided around an edge of the bottom wall 121. The first housing body 11 and the bottom wall 121 are opposite each other in a first direction X. The first housing body 11 and the bottom wall 121 may be arranged in parallel and both perpendicular to the first direction X. An end of the side wall 122 is connected to the first housing body 11, and the other end is connected to the bottom wall 121. The first housing body 11 is provided with a first through hole 110 in communication with the accommodating space S. In some embodiments, when viewed from the first direction X, the bottom walls 121 of the first housing body 11 and second housing body 12 may both be circular. The first through hole 110 may also be circular. In some other embodiments, the first housing body 11, the second housing body 12 and the first through hole 110 may alternatively be of other shapes, such as an elliptic, square, or hexagonal shape. In some embodiments, the electrochemical apparatus 100 may be a button cell, and the entire housing 10 may be made of a steel material. A steel housing may include elements Fe and C, and the steel housing may further include one or more of elements Ni, Co, Al, Mn, Cr, Cu, Mg, Mo, S, Si, Ti, V, Pb, Sb, N, and P. In addition, the second housing body 12 may be integrally formed, and the first housing body 11 may be fixed on the side wall 122 of the second housing body 12 by welding.

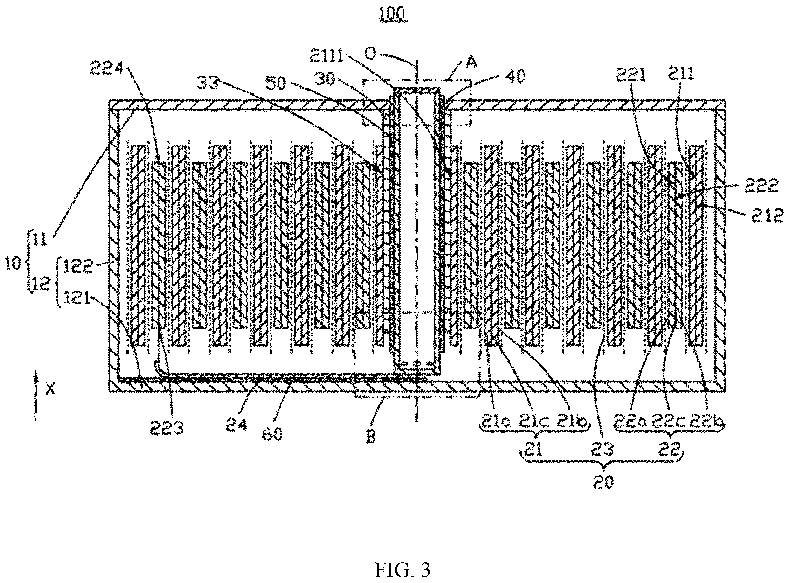

As shown in FIG. 3, the electrode assembly 20 includes a first electrode plate 21, a second electrode plate 22, and a separator 23 provided between the first electrode plate 21 and the second electrode plate 22. The separator 23 is configured to prevent direct contact between the first electrode plate 21 and the second electrode plate 22, thereby reducing the possibility of a short circuit caused by contact between the first electrode plate 21 and the second electrode plate 22. The electrode assembly 20 is a wound structure, that is, the first electrode plate 21, the separator 23, and the second electrode plate 22 are sequentially stacked and wound around a winding center axis O in the first direction X to form the electrode assembly 20. In some embodiments, the first electrode plate 21 is a negative electrode, and the second electrode plate 22 is a positive electrode.

In some embodiments, the first electrode plate 21 includes a first active substance layer 21a, a first current collector 21c and a second active substance layer 21b stacked sequentially. The first current collector 21c includes a first surface 211 and a second surface 212 opposite to each other, the first surface 211 being closer to the winding center axis O than the second surface 212. The first active substance layer 21a is provided on the first surface 211, and the second active substance layer 21b is provided on the second surface 212. The first current collector 21c may have a current collection function. For example, the first current collector 21c may be made of a conductive substance such as copper, nickel, or a carbon-based conductive substance. In some embodiments, when the first electrode plate 21 is a negative electrode, the first current collector 21c may be made of copper. The first active substance layer 21a and the second active substance layer 21b both contain an active substance that can be selected from at least one of a graphite material, an alloy material, lithium metal, or lithium metal alloy. The graphite material may be selected from at least one of artificial graphite, soft carbon, hard carbon, or natural graphite; and the alloy material may be selected from at least one of silicon, silicon oxide, tin, or titanium sulfide.

The second electrode plate 22 includes a third active substance layer 22a, a second current collector 22c and a fourth active substance layer 22b that are stacked. The second current collector 22c includes a third surface 221 and a fourth surface 222 opposite to each other, the third surface 221 being closer to the winding center axis O than the fourth surface 222. The third active substance layer 22a is provided on the third surface 221, and the fourth active substance layer 22b is provided on the fourth surface 222. The second current collector 22c has a current collection function. For example, the second current collector 22c may be made of aluminum or nickel. In some embodiments, when the second electrode plate 22 is a positive electrode, the second current collector 22c may be made of an aluminum foil that has relatively low strength but good conductivity. The third active substance layer 22a and the fourth active substance layer 22b both contain an active substance, for example, containing at least one of lithium cobaltate, lithium manganate, lithium nickelate, lithium nickel cobalt manganate, lithium iron phosphate, lithium manganese iron phosphate, lithium vanadium phosphate, lithium vanadoxy phosphate, a lithium-rich manganese-based material, lithium nickel cobalt aluminate, or a relevant positive electrode material of sodium batteries such as a Prussian compound.

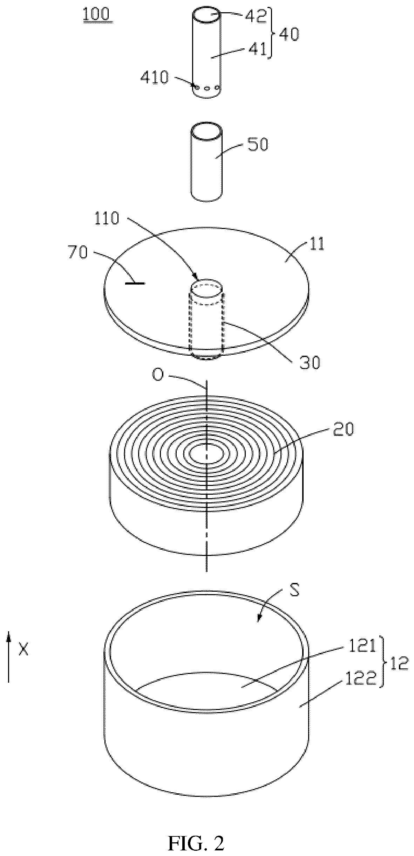

Referring to FIG. 3 to FIG. 5, the electrochemical apparatus 100 further includes a first conductive member 30 and a second conductive member 40. The first conductive member 30 is provided in the accommodating space S and fixed on the first housing body 11. In the first direction X, the first conductive member 30 includes a first end 31 and a second end 32 opposite to each other, the first end 31 being connected to the first housing body 11. In the first direction X, the second end 32 and the bottom wall 121 of the second housing body 12 may be spaced apart. In some embodiments, the first conductive member 30 and the first housing body 11 may be integrally formed. For example, the first conductive member 30 is directly formed by an edge of the first through hole 110 extending along the first direction X. In some other embodiments, the first conductive member 30 and the first housing body 11 may alternatively be separate structures. The first electrode plate 21, the separator 23 and the second electrode plate 22 are wound around the first conductive member 30 to form the electrode assembly 20, and the first electrode plate 21 is electrically connected to the first conductive member 30. Therefore, the first conductive member 30 and the housing 10 connected to the first conductive member 30 may both exhibit the same electric polarity as the first electrode plate 21. The first conductive member 30 is a hollow structure and defines a first cavity 300 in communication with the first through hole 110. Along a cross section perpendicular to the first direction X, the first conductive member 30 may be made into a shape as required by the electrode assembly 20. After the electrode assembly 20 is formed by winding around the first conductive member 30, the electrode assembly 20 may have a shape approximately the same as the shape of the cross section of the first conductive member 30 or be of a cylindrical shape, depending on the size of the first conductive member 30 and the number of wound layers of the electrode assembly 20. As shown in FIG. 2, in some embodiments, the cross section of the first conductive member 30 is circular (that is, the entire first conductive member 30 is a hollow cylinder), and the first through hole 110 matches the cross section of the first conductive member 30 in shape. In other embodiments, the cross section of the first conductive member 30 may alternatively be rectangular, hexagonal, elliptic, or the like.

The second conductive member 40 is provided in the first cavity 300 and electrically insulated from the first conductive member 30. In some embodiments, when the cross section of the first conductive member 30 is circular, the cross section of the second conductive member 40 may also be circular. The second electrode plate 22 is electrically connected to the second conductive member 40, such that the second conductive member 40 can exhibit the same electric polarity as the second electrode plate 22. For example, when the first electrode plate 21 is a negative electrode and the second electrode plate 22 is a positive electrode, the first conductive member 30 and the housing 10 both exhibit a negative polarity, and the second conductive member 40 exhibits a positive polarity (the second conductive member 40 can serve as a pole). The second conductive member 40 is also a hollow structure and defines a second cavity 400. The second conductive member 40 includes a body portion 41 and a sealing portion 42 electrically connected to each other. The body portion 41 is provided with a second through hole 410, where the second through hole 410 is in communication with the second cavity 400 and the accommodating space S. Therefore, after an electrolyte is injected into the second cavity 400, the electrolyte can further flow into the accommodating space S via the second through hole 410. The sealing portion 42 is hermetically connected to the body portion 41 such that the second cavity 400 is isolated from the outside. Furthermore, the sealing portion 42 is hermetically connected to the body portion 41 after the electrolyte has been injected. In some embodiments, when the second conductive member 40 exhibits a positive polarity, the sealing portion 42 and the body portion 41 may be made of aluminum. The sealing portion 42 and the body portion 41 may be fixed by welding (for example, resistance welding or laser welding), thereby improving the stability and reliability of connection therebetween. In the first direction, the body portion 41 includes a third end 411 and a fourth end 412 opposite to the third end 411. In some embodiments, the sealing portion 42 is hermetically connected to the third end 411, and the second through hole 410 is provided in the fourth end 412. The sealing portion 42 is hermetically connected to the third end 411, so that the convenience for mounting of the sealing portion 42 is improved. The second through hole 410 is provided in the fourth end 412, allowing most of the electrolyte in the second cavity 400 to smoothly flow into the accommodating space S.

During assembly, the first housing body 11 equipped with the first conductive member 30 may be provided first. The first electrode plate 21, the separator 23 and the second electrode plate 22 are sequentially stacked and wound around the first conductive member 30 to form the electrode assembly 20, and the first electrode plate 21 is electrically connected to the first conductive member 30. The second conductive member 40 is inserted into the first conductive member 30, and the second conductive member 40 is electrically connected to the second electrode plate 22. Subsequently, the first housing body 11 provided with the electrode assembly 20 and the first conductive member 30 is fixed on the second housing body 12, such that the first housing body 11 and the second housing body 12 enclose the accommodating space S. Then, an electrolyte is injected into the second cavity 400 of the second conductive member 40, such that the electrolyte further flows into the accommodating space S via the second through hole 410 to fully infiltrate the electrode assembly 20. Then, the sealing portion 42 of the second conductive member 40 is hermetically connected to the body portion 41, such that the second cavity 400 is isolated from the outside, thereby reducing the risk of the electrolyte in the accommodating space S flowing out of the housing 10 via the second through hole 410 and the second cavity 400.

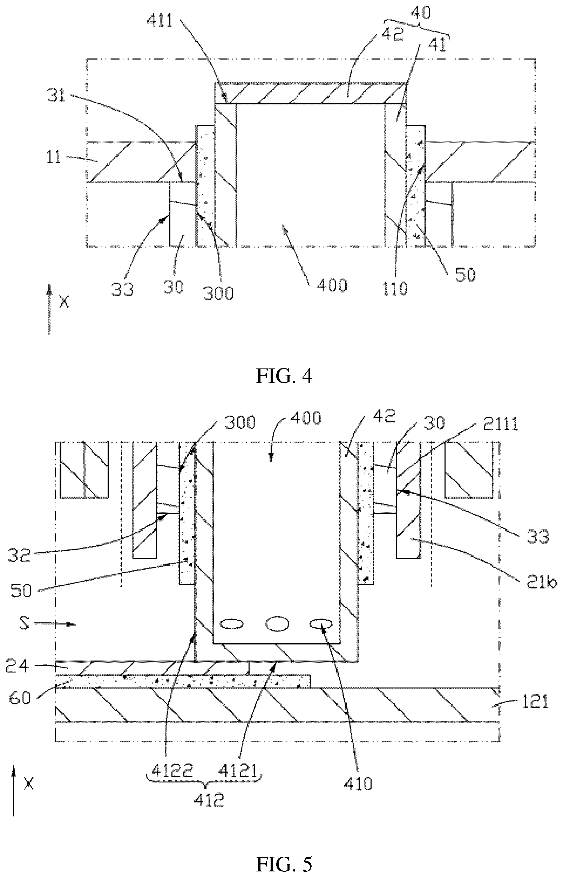

As shown in FIG. 5, in some embodiments, when the second end 32 is spaced from the bottom wall 121 of the second housing body 12, the fourth end 412 may be configured to extend out with respect to the second end 32 in a direction opposite to the first direction X. In this way, while the electrolyte injected into the second cavity 400 is flowing into the accommodating space S via the second through hole 410, the obstruction caused by an inner wall of the first conductive member 30 to the electrolyte can be reduced, allowing the electrolyte to smoothly enter the accommodating space S. In some embodiments, the fourth end 412 includes an end surface 4121 away from the sealing portion 42 and a side surface 4122 connected to the end surface 4121. The second through hole 410 may be provided in the side surface 4122 of the fourth end 412, or may be provided in the end surface 4121 of the fourth end 412. In some specific embodiments, the second through hole 410 is provided in the side surface 4122 of the fourth end 412. In addition, a plurality of second through holes 410 are spaced apart in the side surface 4122 along a circumferential direction of the fourth end 412, thereby improving infiltration efficiency of the electrolyte to the electrode assembly 20 and electrolyte injection efficiency.

As shown in FIG. 4, further, the third end 411 may be configured to extend out of the first through hole 110 in the first direction X. That is, the third end 411 extends out of the first housing body 11. In this way, the sealing portion 42 and the body portion 41 can be conveniently fixed by welding, reducing the risk of a short circuit caused by the sealing portion 42 coming into contact with part of the first housing body 11 around the first through hole 110 during welding. The outward extension of the third end 411 also facilitates electrical connection between the second conductive member 40 and an external element. It can be understood that since the second conductive member 40 can serve as a pole, the third end 411 being configured to extend out of the first housing body 11 does not increase the height of the electrochemical apparatus 100 like a sealing nail in the prior art.

In this invention, the second conductive member 40 can serve as a pole to lead out electric polarity of the second electrode plate 22. In addition, the second conductive member 40 is also used for electrolyte injection. The electrolyte is injected into the second conductive member 40, such that the electrolyte can flow into the accommodating space S via the second through hole 410. The sealing portion 42 of the second conductive member 40 is hermetically connected to the body portion 41, thus reducing the risk of electrolyte leakage after electrolyte injection. Therefore, the second conductive member 40 has both a function of being connected to an external element and an electrolyte injection function. In this invention, there is no need to provide an electrolyte injection opening in the housing 10, reducing the risk that surface flatness may be affected due to a sealing nail welded in the electrolyte injection opening after electrolyte injection and also reducing the risk that additional provision of the sealing nail may lead to height increase of the electrochemical apparatus, thus helping to increase the energy density.

In addition, after the electrode assembly 20 is formed by winding around the first conductive member 30, different from a winding mandrel in the prior art, the first conductive member 30 does not need to be pulled out and is retained in the accommodating space S, and the first electrode plate 21 is electrically connected to the housing 10. Therefore, the risk that the first electrode plate 21, the second electrode plate 22 or the separator 23 is taken out or misaligned when the winding mandrel is pulled out is reduced, and the safety of the electrochemical apparatus 100 is improved. Moreover, the first conductive member 30 and the second conductive member 40 can make full use of a hollow position that is for pulling out the winding mandrel and reserved at a winding start end of the electrode assembly 20, and this can also reduce influence of the provision of the first conductive member 30 and the second conductive member 40 on the energy density. The first conductive member 30 and the second conductive member 40 can also provide support when the center of the housing 10 sinks and deforms (for example, when being subjected to mechanical abuse such as extrusion and collision, or when the electrode assembly 20 has large expansion during cycling), reducing the possibility of deformation of the electrode assembly 20 due to the action of the housing 10.

In some embodiments, since the first conductive member 30 and the second conductive member 40 have opposite electric polarities, a first insulating layer 50 is provided between the first conductive member 30 and the body portion 41. The first insulating layer 50 is configured to electrically insulate the first conductive member 30 from the body portion 41, reducing the risk of a short circuit caused by direct contact between the first conductive member 30 and the body portion 41. In addition, the first insulating layer 50 is further configured to hermetically connect the first conductive member 30 and the body portion 41, reducing the risk of the electrolyte leaking via a gap between the first conductive member 30 and the body portion 41, as well as reducing the risk of external impurities entering the housing 10 via the gap. In some embodiments, to improve insulation between the first conductive member 30 and the body portion 41, the first insulating layer 50 may be configured to extend out of the first through hole 110 in the first direction X. The first insulating layer 50 may be made of at least one of polypropylene (PP), polyethylene terephthalate (PET), polystyrene (PS), polyimide (PI), nylon, or polytetrafluoroethylene (PTFE).

As shown in FIG. 3, in some embodiments, the first surface 211 includes a first region 2111, where the first region 2111 is exposed from the first active substance layer 21a. Specifically, the first region 2111 may be an uncoated foil region or a single-sided region, and forms an innermost ring of the electrode assembly 20 after winding. The first region 2111 is attached to an outer side surface 33 of the first conductive member 30. This allows the first region 2111 to be electrically connected to the first conductive member 30, such that the first conductive member 30 has the same electric polarity as the first electrode plate 21. In this case, a tab on the first electrode plate 21 can be omitted, thus simplifying the manufacturing process. It can be understood that due to the presence of tension during winding, the first region 2111 can be stably attached to the outer side surface 33 of the first conductive member 30 after winding, improving the stability of electrical connection therebetween. In some embodiments, the outer side surface 33 can be roughened to increase the friction force between the first region 2111 and the outer side surface 33, facilitating winding, improving tightness of inner turns of a jelly roll after winding, and reducing the contact resistance between the first region 2111 and the first conductive member 30.

As shown in FIG. 3 and FIG. 5, in some embodiments, the electrode assembly 20 further includes a tab 24 connected to the second current collector 22c. When the second through hole 410 is provided in the side surface 4122 of the fourth end 412, the tab 24 is connected to the end surface 4121 of the fourth end 412, such that the second electrode plate 22 is electrically connected to the second conductive member 40. In some embodiments, when the fourth end 412 extends out of the second end 32, the risk of a short circuit caused by contact between the tab 24 and the second end 32 can also be reduced. In the first direction X, the second current collector 22c includes a first side 223 and a second side 224 disposed opposite to each other. In the first direction X, the first side 223 is closer to the bottom wall 121 of the second housing body 12 than the second side 224. The tab 24 extends out of the first side 223 and is connected to the end surface 4121. In some embodiments, the tab 24 and the end surface 4121 may be fixed by welding (for example, resistance welding or laser welding), thereby improving the stability and reliability of electrical connection therebetween. To facilitate the welding between the tab 24 and the end surface 4121, the end surface 4121 may be configured as a plane.

Further, since the second housing body 12 and the tab 24 exhibit opposite polarities, a second insulating layer 60 may be provided between the tab 24 and the second housing body 12. The second insulating layer 60 is configured to electrically insulate the second housing body 12 from the end surface 4121 and the tab 24, reducing the risk of a short circuit. The second insulating layer 60 may be made of at least one of polypropylene (PP), polyethylene terephthalate (PET), polystyrene (PS), polyimide (PI), nylon, or polytetrafluoroethylene (PTFE). More specifically, the second insulating layer 60 may be a high-temperature-resistant insulating tape, thereby reducing the risk of the second insulating layer 60 being damaged in welding of the tab 24.

As shown in FIG. 1 and FIG. 2, in some embodiments, at least one of the first housing body 11 or the second housing body 12 is further provided with an explosion-proof valve 70. When gas is produced and continuously accumulates inside the electrochemical apparatus 100, the explosion-proof valve 70 is blown open, such that the gas in the housing 10 is released and pressure in the accommodating space S is reduced, thereby improving the safety of the electrochemical apparatus 100. In some specific embodiments, the explosion-proof valve 70 may be provided on the first housing body 11. The explosion-proof valve 70 may be a gap that is laser-etched on the first housing body 11 and runs through part of the first housing body 11 along the first direction X, and the shape and depth of the explosion-proof valve 70 can be set according to specific requirements. Therefore, when an internal pressure of the electrochemical apparatus 100 reaches a certain degree, the explosion-proof valve 70 cracks due to stress concentration, achieving the purpose of relieving the pressure. In addition, when viewed from the first direction X, the sealing portion 42 and the explosion-proof valve 70 are misaligned in position on the first housing body 11. Therefore, the provision of the explosion-proof valve 70 has no influence on the second conductive member 40 that is electrically connected to an external element as a pole.

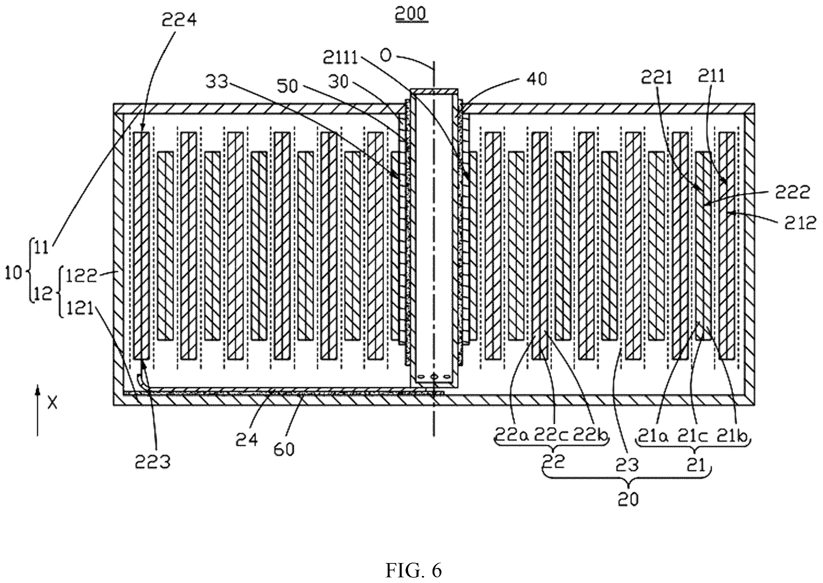

Referring to FIG. 6, another embodiment of this invention further provides an electrochemical apparatus 200. The electrochemical apparatus 200 differs from the electrochemical apparatus 100 in that the first electrode plate 21 is a positive electrode and the second electrode plate 22 is a negative electrode. In this case, the first conductive member 30 and the housing 10 that are electrically connected to the first electrode plate 21 exhibit a positive polarity, and the second conductive member 40 electrically connected to the second electrode plate 22 exhibits a negative polarity.

The electrochemical apparatuses 100 and 200 in this invention include all apparatuses in which an electrochemical reaction can take place. Specifically, the electrochemical apparatuses 100 and 200 include all kinds of primary batteries, secondary batteries, fuel batteries, solar batteries, or capacitors (for example, super capacitors). Optionally, the electrochemical apparatuses 100 and 200 may be secondary lithium batteries, including secondary lithium metal batteries, secondary lithium-ion batteries, secondary lithium polymer batteries, and secondary lithium-ion polymer batteries.

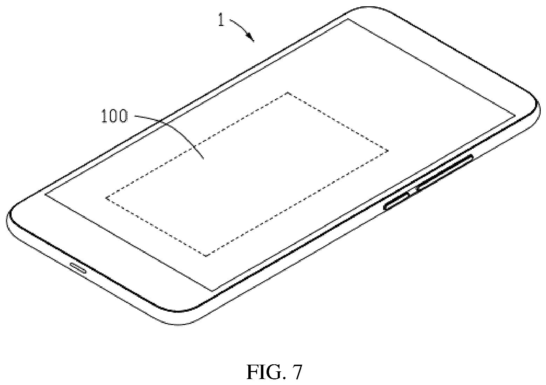

Referring to FIG. 7, an embodiment of this invention further provides an electronic apparatus 1 including the electrochemical apparatus 100 (or the electrochemical apparatus 200). The electronic apparatus 1 is supplied with power via the foregoing electrochemical apparatus 100. In an embodiment, the electronic apparatus 1 of this invention may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

## Claims

1. An electrochemical apparatus (100), comprising a housing (10), an electrode assembly (20), and an electrolyte; wherein the housing (10) comprises a first housing body (11) and a second housing body (12), the first housing body (11) and the second housing body (12) enclose an accommodating space (S), and the electrode assembly (20) and the electrolyte are provided in the accommodating space (S); and the electrode assembly (20) comprises a first electrode plate (21), a second electrode plate (22), and a separator (23) located between the first electrode plate (21) and the second electrode plate (22, the electrochemical apparatus (100) further comprises:
a first conductive member (30) provided in the accommodating space (S) and fixed on the first housing body (11); wherein the first electrode plate (21), the separator (23) and the second electrode plate (22) are wound around the first conductive member (30) to form the electrode assembly (20); the first electrode plate (21) is electrically connected to the first conductive member (30); the first conductive member (30) is a hollow structure and defines a first cavity (300); the first housing body (11) is further provided with a first through hole (110), and the first through hole (110) is in communication with the first cavity (300), **characterized in that**
a second conductive member (40) provided in the first cavity (300) and electrically insulated from the first conductive member (30), wherein the second electrode plate (22) is electrically connected to the second conductive member (40); the second conductive member (40) is a hollow structure and defines a second cavity (400); the second conductive member (40) comprises a body portion (41) and a sealing portion (42) electrically connected to each other, wherein the body portion (41) is provided with a second through hole (410), the second through hole (410) is in communication with the second cavity (400) and the accommodating space (S), and the sealing portion (42) is hermetically connected to the body portion (41) to isolate the second cavity (400) from the outside.

2. The electrochemical apparatus (100) according to claim 1, **characterized in that**,
a first insulating layer (50) is provided between the first conductive member (30) and the body portion (41); and
the first insulating layer (50) is configured to hermetically connect the first conductive member (30) and the body portion (41).

3. The electrochemical apparatus (100) according to claim 1 or 2, **characterized in that**,
the first conductive member (30) comprises a first end (31) and a second end (32) opposite to the first end (31);
the first end (31) is connected to the first housing body (11);
in a first direction (X), the body portion (41) comprises a third end (411) and a fourth end (412) opposite to the third end (411);
the sealing portion (42) is hermetically connected to the third end (411);
the second through hole (410) is provided on the fourth end (412); and
the first direction (X) is a direction from the second end (32) toward the first end (31).

4. The electrochemical apparatus (100) according to claim 3, **characterized in that**,
in a direction opposite to the first direction (X), the fourth end (412) extends out with respect to the second end (32);
the fourth end (412) comprises an end surface (4121) facing away from the sealing portion and a side surface (4122) connected to the end surface (4121); and
the second through hole (410) being provided on the side surface (4122).

5. The electrochemical apparatus (100) according to claim 3, **characterized in that**, in the first direction (X), the third end (411) extends out of the first through hole (110).

6. The electrochemical apparatus (100) according to any one of claims 1 to 5, **characterized in that**,
the first electrode plate (21) comprises a first current collector (21c) and a first active substance layer (21a), wherein the first active substance layer (21a) is provided on the first current collector (21c);
the first current collector (21c) comprises an uncoated foil region with no first active substance layer at one end in a length direction of the first current collector;
the uncoated foil region being attached to an outer side surface of the first conductive member (30).

7. The electrochemical apparatus (100) according to claim 6, **characterized in that**, the outer side surface of the first conductive member (30) is roughened.

8. The electrochemical apparatus (100) according to claim 4, **characterized in that**,
the second electrode plate (22) comprises a second current collector (22c);
the electrode assembly (20) further comprises a tab (24) connected to the second current collector (22c); and
the tab (24) is connected to the end surface (4121) of the fourth end (412).

9. The electrochemical apparatus (100) according to claim 8, **characterized in that**, a second insulating layer (60) is provided between the tab (24) and the second housing body (12).

10. The electrochemical apparatus (100) according to claim 3, **characterized in that**, the second conductive member (40) is configured to be used for injection of the electrolyte into the electrochemical apparatus (100); wherein the electrolyte flows from the second conductive member (40) into the accommodating space (S) via the second through hole (410).

11. An electronic apparatus (1), **characterized in that**, the electronic apparatus (1) comprises the electrochemical apparatus (100) according to any one of claims 1 to 10.

## Patentansprüche

1. Elektrochemische Vorrichtung (100), umfassend ein Gehäuse (10), eine Elektrodenbaugruppe (20) und einen Elektrolyten; wobei das Gehäuse (10) einen ersten Gehäusekörper (11) und einen zweiten Gehäusekörper (12) umfasst, der erste Gehäusekörper (11) und der zweite Gehäusekörper (12) einen Aufnahmeraum (S) umschließen, und die Elektrodenbaugruppe (20) und der Elektrolyt in dem Aufnahmeraum (S) vorgesehen sind; und die Elektrodenbaugruppe (20) eine erste Elektrodenplatte (21), eine zweite Elektrodenplatte (22) und einen Separator (23), der sich zwischen der ersten Elektrodenplatte (21) und der zweiten Elektrodenplatte (22) befindet, umfasst, wobei die elektrochemische Vorrichtung (100) ferner umfasst:
ein erstes leitfähiges Element (30), das in dem Aufnahmeraum (S) vorgesehen und am ersten Gehäusekörper (11) befestigt ist; wobei die erste Elektrodenplatte (21), der Separator (23) und die zweite Elektrodenplatte (22) um das erste leitfähige Element (30) gewickelt sind, um die Elektrodenbaugruppe (20) zu bilden; die erste Elektrodenplatte (21) elektrisch mit dem ersten leitfähigen Element (30) verbunden ist; das erste leitfähige Element (30) eine Hohlstruktur ist und einen ersten Hohlraum (300) definiert; der erste Gehäusekörper (11) ferner mit einem ersten Durchgangsloch (110) versehen ist, und das erste Durchgangsloch (110) mit dem ersten Hohlraum (300) in Verbindung steht, **dadurch gekennzeichnet, dass**
ein zweites leitfähiges Element (40), das in dem ersten Hohlraum (300) vorgesehen und von dem ersten leitfähigen Element (30) elektrisch isoliert ist, wobei die zweite Elektrodenplatte (22) elektrisch mit dem zweiten leitfähigen Element (40) verbunden ist; das zweite leitfähige Element (40) eine Hohlstruktur ist und einen zweiten Hohlraum (400) definiert; das zweite leitfähige Element (40) einen Körperabschnitt (41) und einen Dichtungsabschnitt (42) umfasst, die elektrisch miteinander verbunden sind, wobei der Körperabschnitt (41) mit einem zweiten Durchgangsloch (410) versehen ist, das zweite Durchgangsloch (410) mit dem zweiten Hohlraum (400) und dem Aufnahmeraum (S) in Verbindung steht, und der Dichtungsabschnitt (42) hermetisch mit dem Körperabschnitt (41) verbunden ist, um den zweiten Hohlraum (400) von außen zu isolieren.

2. Elektrochemische Vorrichtung (100) nach Anspruch 1, **dadurch gekennzeichnet, dass**
eine erste Isolierschicht (50) zwischen dem ersten leitfähigen Element (30) und dem Körperabschnitt (41) vorgesehen ist; und
die erste Isolierschicht (50) so eingerichtet ist, dass sie das erste leitfähige Element (30) und den Körperabschnitt (41) hermetisch verbindet.

3. Elektrochemische Vorrichtung (100) nach Anspruch 1 oder 2, **dadurch gekennzeichnet, dass**
das erste leitfähige Element (30) ein erstes Ende (31) und ein zweites Ende (32) gegenüber dem ersten Ende (31) umfasst;
das erste Ende (31) mit dem ersten Gehäusekörper (11) verbunden ist;
der Körperabschnitt (41) in einer ersten Richtung (X) ein drittes Ende (411) und ein viertes Ende (412) gegenüber dem dritten Ende (411) umfasst;
der Dichtungsabschnitt (42) hermetisch mit dem dritten Ende (411) verbunden ist; das zweite Durchgangsloch (410) am vierten Ende (412) vorgesehen ist; und
die erste Richtung (X) eine Richtung vom zweiten Ende (32) in Richtung des ersten Endes (31) ist.

4. Elektrochemische Vorrichtung (100) nach Anspruch 3, **dadurch gekennzeichnet, dass**
sich das vierte Ende (412) in Bezug auf das zweite Ende (32) in einer zur ersten Richtung (X) entgegengesetzten Richtung nach außen erstreckt;
das vierte Ende (412) eine vom Dichtungsabschnitt weg gerichtete Endfläche (4121) und eine mit der Endfläche (4121) verbundene Seitenfläche (4122) umfasst; und
das zweite Durchgangsloch (410) an der Seitenfläche (4122) vorgesehen ist.

5. Elektrochemische Vorrichtung (100) nach Anspruch 3, **dadurch gekennzeichnet, dass** sich das dritte Ende (411) in der ersten Richtung (X) aus dem ersten Durchgangsloch (110) heraus erstreckt.

6. Elektrochemische Vorrichtung (100) nach einem der Ansprüche 1 bis 5, **dadurch gekennzeichnet, dass**
die erste Elektrodenplatte (21) einen ersten Stromabnehmer (21c) und eine erste Wirkstoffschicht (21a) umfasst, wobei die erste Wirkstoffschicht (21a) auf dem ersten Stromabnehmer (21c) vorgesehen ist;
der erste Stromabnehmer (21c) einen unbeschichteten Folienbereich ohne erste Wirkstoffschicht an einem Ende in einer Längsrichtung des ersten Stromabnehmers umfasst;
der unbeschichtete Folienbereich an einer äußeren Seitenfläche des ersten leitfähigen Elements (30) befestigt ist.

7. Elektrochemische Vorrichtung (100) nach Anspruch 6, **dadurch gekennzeichnet, dass** die äußere Seitenfläche des ersten leitfähigen Elements (30) aufgeraut ist.

8. Elektrochemische Vorrichtung (100) nach Anspruch 4, **dadurch gekennzeichnet, dass**
die zweite Elektrodenplatte (22) einen zweiten Stromabnehmer (22c) umfasst;
die Elektrodenbaugruppe (20) ferner eine Lasche (24) umfasst, die mit dem zweiten Stromabnehmer (22c) verbunden ist; und
die Lasche (24) mit der Endfläche (4121) des vierten Endes (412) verbunden ist.

9. Elektrochemische Vorrichtung (100) nach Anspruch 8, **dadurch gekennzeichnet, dass** zwischen der Lasche (24) und dem zweiten Gehäusekörper (12) eine zweite Isolierschicht (60) vorgesehen ist.

10. Elektrochemische Vorrichtung (100) nach Anspruch 3, **dadurch gekennzeichnet, dass** das zweite leitfähige Element (40) so eingerichtet ist, dass es zur Injektion des Elektrolyten in die elektrochemische Vorrichtung (100) verwendet wird; wobei der Elektrolyt vom zweiten leitfähigen Element (40) über das zweite Durchgangsloch (410) in den Aufnahmeraum (S) fließt.

11. Elektronische Vorrichtung (1), **dadurch gekennzeichnet, dass** die elektronische Vorrichtung (1) die elektrochemische Vorrichtung (100) nach einem der Ansprüche 1 bis 10 umfasst.

## Revendications

1. Dispositif électrochimique (100) comprenant un boîtier (10), un ensemble d'électrodes (20) et un électrolyte ; dans lequel le boîtier (10) comprend un premier corps de boîtier (11) et un deuxième corps de boîtier (12), le premier corps de boîtier (11) et le deuxième corps de boîtier (12) délimitant un logement (S), et l'ensemble d'électrodes (20) et l'électrolyte sont disposés dans le logement (S) ; et l'ensemble d'électrodes (20) comprend une première plaque d'électrode (21), une deuxième plaque d'électrode (22) et un séparateur (23) situé entre la première plaque d'électrode (21) et la deuxième plaque d'électrode (22), l'appareil électrochimique (100) comprenant en outre :
un premier élément conducteur (30) disposé dans le logement (S) et fixé sur le premier corps de boîtier (11) ; dans lequel la première plaque d'électrode (21), le séparateur (23) et la deuxième plaque d'électrode (22) sont enroulés autour du premier élément conducteur (30) pour former l'ensemble d'électrodes (20) ; la première plaque d'électrode (21) est connectée électriquement au premier élément conducteur (30) ; le premier élément conducteur (30) est une structure creuse et définit une première cavité (300) ; le premier corps de boîtier (11) est en outre muni d'un premier trou traversant (110), et le premier trou traversant (110) est en communication avec la première cavité (300), **caractérisé en ce que**
un deuxième élément conducteur (40) disposé dans la première cavité (300) et isolé électriquement du premier élément conducteur (30), la deuxième plaque d'électrode (22) étant reliée électriquement au deuxième élément conducteur (40) ; le deuxième élément conducteur (40) est une structure creuse et définit une deuxième cavité (400) ; le deuxième élément conducteur (40) comprend une partie de corps (41) et une partie d'étanchéité (42) reliées électriquement l'une à l'autre, dans lequel la partie de corps (41) est pourvue d'un deuxième trou traversant (410), le deuxième trou traversant (410) est en communication avec la deuxième cavité (400) et le logement (S), et la partie d'étanchéité (42) est reliée hermétiquement à la partie de corps (41) afin d'isoler la deuxième cavité (400) de l'extérieur.

2. Appareil électrochimique (100) selon la revendication 1, **caractérisé en ce que** :
une première couche isolante (50) est prévue entre le premier élément conducteur (30) et la partie de corps (41) ; et
la première couche isolante (50) est conçue pour relier hermétiquement le premier élément conducteur (30) et la partie de corps (41).

3. Appareil électrochimique (100) selon la revendication 1 ou 2, **caractérisé en ce que** :
le premier élément conducteur (30) comprend une première extrémité (31) et une deuxième extrémité (32) opposée à la première extrémité (31) ;
la première extrémité (31) est reliée au premier corps de boîtier (11) ;
dans une première direction (X), la partie de corps (41) comprend une troisième extrémité (411) et une quatrième extrémité (412) opposée à la troisième extrémité (411) ;
la partie d'étanchéité (42) est reliée de manière hermétique à la troisième extrémité (411) ;
le deuxième trou traversant (410) est prévu sur la quatrième extrémité (412) ; et
la première direction (X) est une direction allant de la deuxième extrémité (32) vers la première extrémité (31).

4. Appareil électrochimique (100) selon la revendication 3, **caractérisé en ce que**,
dans une direction opposée à la première direction (X), la quatrième extrémité (412) s'étend vers l'extérieur par rapport à la deuxième extrémité (32) ;
la quatrième extrémité (412) comprend une surface d'extrémité (4121) tournée à l'opposé de la partie d'étanchéité et une surface latérale (4122) reliée à la surface d'extrémité (4121) ; et
le deuxième trou traversant (410) est prévu sur la surface latérale (4122).

5. Appareil électrochimique (100) selon la revendication 3, **caractérisé en ce que**, dans la première direction (X), la troisième extrémité (411) s'étend hors du premier trou traversant (110).

6. Appareil électrochimique (100) selon l'une quelconque des revendications 1 à 5, **caractérisé en ce que** :
la première plaque d'électrode (21) comprend un premier collecteur de courant (21c) et une première couche de substance active (21a), la première couche de substance active (21a) étant disposée sur le premier collecteur de courant (21c) ;
le premier collecteur de courant (21c) comprend une région de feuille non revêtue, dépourvue de première couche de substance active, à une extrémité dans le sens de la longueur du premier collecteur de courant ;
la région de feuille non revêtue étant fixée à une surface latérale extérieure du premier élément conducteur (30).

7. Dispositif électrochimique (100) selon la revendication 6, **caractérisé en ce que** la surface latérale extérieure du premier élément conducteur (30) est rendue rugueuse.

8. Dispositif électrochimique (100) selon la revendication 4, **caractérisé en ce que** :
la deuxième plaque d'électrode (22) comprend un deuxième collecteur de courant (22c) ;
l'ensemble d'électrodes (20) comprend en outre une languette (24) reliée au deuxième collecteur de courant (22c) ; et
la languette (24) est reliée à la surface d'extrémité (4121) de la quatrième extrémité (412).

9. Appareil électrochimique (100) selon la revendication 8, **caractérisé en ce qu'**une deuxième couche isolante (60) est prévue entre la languette (24) et le deuxième corps de boîtier (12).

10. Appareil électrochimique (100) selon la revendication 3, **caractérisé en ce que** le deuxième élément conducteur (40) est configuré pour être utilisé pour l'injection de l'électrolyte dans l'appareil électrochimique (100) ; dans lequel l'électrolyte s'écoule du deuxième élément conducteur (40) vers l'espace de réception (S) via le deuxième trou traversant (410).

11. Appareil électronique (1), **caractérisé en ce que** l'appareil électronique (1) comprend l'appareil électrochimique (100) selon l'une quelconque des revendications 1 à 10.
